(19) Europäisches Patentamt
European Patent Office
Office européen des brevets

(11) EP 0 339 938 B1

(12) **EUROPEAN PATENT SPECIFICATION**

(45) Date of publication and mention
of the grant of the patent:
**03.07.1996 Bulletin 1996/27**

(51) Int Cl.6: **H04N 11/04**

(21) Application number: **89304115.2**

(22) Date of filing: **25.04.1989**

(54) **Method and system for compressing colour video encoded data**

Verfahren und System zur Kompression von kodierten Farbvideodaten

Méthode et système de compression de données vidéo couleur codées

(84) Designated Contracting States:
**AT BE CH DE ES FR GB GR IT LI LU NL SE**

(30) Priority: **27.04.1988 US 186569**
**27.04.1988 US 186573**

(43) Date of publication of application:
**02.11.1989 Bulletin 1989/44**

(73) Proprietor: **BIL (Far East Holdings) Limited (a Hong Kong corporation)**
**La Jolla, California 92037-4241 (US)**

(72) Inventors:
• **Music, John**
**Irvine California 92714 (US)**

• **Thomas, James L.**
**Placentia California 92670 (US)**
• **Smith, Gordon H.**
**Santa Ana California 92714 (US)**

(74) Representative:
**Cross, Rupert Edward Blount et al**
**BOULT, WADE & TENNANT**
**27 Furnival Street**
**London EC4A 1PQ (GB)**

(56) References cited:
**EP-A- 0 107 072**       **EP-A- 0 261 561**
**DE-A- 2 304 344**       **FR-A- 2 524 740**
**US-A- 4 546 383**

## Description

BACKGROUND OF THE INVENTION

Field of the Invention:

This invention relates generally to information signal processing, and in particular to the field of processing time sequential information signals, such as video signals, for the purpose of compressing the amount of information to be transferred from an encoding site to a decoding site. A particular use of the invention is in the communication of color video data over telephone lines.

Prior Art:

Encoding of digital television signals ordinarily requires a transmission rate of approximately 200 Mbits/s. Recent developments in coding systems have permitted the transmission rate to be cut to less than 2 Mbits/s. Coding systems using block oriented analysis of video picture frames and processing by a conventional hybrid discrete cosine transform (DCT) coefficient permit transmission at rates of between 64 Kbits/s and 384 Kbits/s. Such a system is described in Gerken and Schiller, "A Low Bit-Rate Image Sequence Coder Combining A Progressive DPCM On Interleaved Rasters With A Hybrid DCT Technique", IEEE Journal on Selected Areas in Communications, Vol. SAC-5, No. 7, August, 1987. Adaptive coding techniques applied to such DCT processing have allowed video data transmission at rates as low as one to two bits per pixel, as is described in Chen and Smith, "Adaptive Coding of Monochrome and Color Images", IEEE Transactions on Communications, Vol. COM-25, No. 11, November 19, 1977. However, information transmitted at such low data rates seriously affects the ability to reconstruct a sufficient number of frames per second so that a real time picture is acceptable to a viewer. High capacity telephone lines are available which will carry transmission at a rate of up to 1.544 Mbits/s, but such lines are extremely expensive at a dedicated use rate, and are still quite expensive at a scheduled use rate. Lower capacity telephone lines are available which permit transmission at rates of up to 56 Kbits/s and 64 Kbits/s. Relatively expensive video digital and coding devices are commercially available which will transmit a video signal at 56,000 bits per second, so that it is necessary to utilize a combination of a device of this nature with the high capacity 1.544 Mbits/s telephone line to allow a framing speed much faster than about one frame per second. The current transmission rate limit of ordinary telephone lines approaches 18,000 bits per second, so that transmission of real time sequencing of video pictures over ordinary telephone lines has been viewed in the prior art as not being feasible.

Various schemes for reducing the amount of redundancy of information to be transmitted in a digital video signal have been used. One technique is to utilize a slow scan camera; and another technique is to transmit every nth scanning line for each frame. Another technique involves the sending of only those parts of a picture frame which are deemed to be important or to have changed in some significant manner, by dividing the picture frame into a number of segments or blocks which are typically 3X3 or 4X4 groups of pixels, and analyzing the content of the blocks. These techniques tend to also reduce the resolution of the video picture.

Another technique in the reduction of transmission time which does not decrease the resolution of a picture transmitted is run length encoding. In run length encoding, the scan lines of a picture frame are encoded as a value of the color content of a series of pixels and the length of the sequence of pixels having that value or range of values. The values may be a measure of the amplitude of a video signal, or other properties of such video signals, such as luminance or chrominance. An example of a system which utilizes run length coding of amplitude of video signals is U. S. Patent US-A-3,609,244 (Mounts). In that system, a frame memory also determines frame to frame differences, so that only those differences from one frame to the next are to be transmitted. Another example of a method for transmitting video signals as compressed run length values which also utilizes statistical coding of frequent values to reduce the number of bits required to represent data is U. S. Patent US-A-4,420,771 (Pirsch).

Ideally, compression of color video information to allow real time sequencing of picture frames at a rate of up to 15 frames per second, and at bit rates as low as 11,500 bits per second would be desirable, to allow the communication of color video data over ordinary telephone lines. A video data compression system able to achieve equivalent data transmission rates as systems using higher quality telephone lines with more efficient and less costly equipment than is currently available would also be desirable.

A technique for compressing video data is disclosed in FR-A-2524740. In this technique video data is coded by segments in two dimensions to form blocks. Where color video data is compressed, the three color components, the luminance value Y, and the two chrominance values B-Y and R-Y are coded separately. There is no combined color data for a segment, nor is there any disclosure of compressing the color components for the segments.

Summary of the Invention

The present invention provides a method of compressing color video data for a plurality of video picture frames, with each picture frame comprising a plurality of scan lines composed of a plurality of pixels, each scan line having a starting pixel and an ending pixel, and each pixel in said picture frame comprising three digital color component signals of first, second and third digital word sizes, respectively, said method comprising the steps of, for each pixel of at least a substantial portion of each of a plurality of scan lines:

a) determining a luminance value for said pixel as a function of at least one of said three digital color component signals;
b) determining at least one decision parameter representing the change in luminance for said pixel as the difference between the luminance value for said pixel and the luminance value for at least one other pixel of the same scan line;
c) comparing the value of said at least one decision parameter with at least one corresponding adjustable threshold to determine whether the value of said at least one decision parameter exceeds said at least one corresponding adjustable threshold, and determining on the basis of said comparison whether said pixel represents a decision point representing a predetermined change in luminance;
d) if the pixel represents a decision point, reducing the word size of at least one of said three digital color component signals to provide corresponding reduced digital color component signals for said pixel; and
e) coding said pixel as one of a run length of pixels defined by a combination of a pixel run length and said corresponding digital color component signals, each said run length of pixels starting either at a starting pixel of the scan line or at a pixel representing a decision point and ending either at a pixel immediately prior to a pixel representing a decision point or at an ending pixel of the scan line.

The present invention further provides a system for compressing color video data for a plurality of video picture frames, with each picture frame comprising a plurality of scan lines composed of a plurality of pixels, each scan line having a starting pixel and an ending pixel and each pixel in said frame comprising three digital color component signals of first, second and third digital word sizes, respectively, said system comprising:

a) means for determining a luminance value for each pixel of at least a substantial portion of each of a plurality of scan lines as a function of at least one of said three digital color components signals;
b) means for determining at least one decision parameter representing a change in luminance for each said pixel as the difference between the luminance value for each said pixel and the luminance value for at least one other pixel of the same scan line;
c) means for comparing said at least one said decision parameter with at least one corresponding adjustable threshold to determine whether the value of said at least one decision parameter exceeds said at least one corresponding adjustable threshold, and for determining on the basis of said comparison whether each said pixel represents a decision point representing a predetermined change in luminance;
d) means for reducing the word size of at least one of said three digital color component signals, for each said pixel that represents a said decision point, to provide corresponding reduced digital color component signals for each said pixel;
e) means for coding each said pixel as one of a run length of pixels defined by a combination of a pixel run length and said corresponding digital color component signals, each said run length of pixels starting either at a starting pixel of the scan line or at a pixel representing a decision point and ending either at a pixel immediately prior to a pixel representing a decision point or at an ending pixel of the scan line.

In one preferred embodiment, the absolute value of the decision parameters is utilized; in an alternative preferred embodiment, the rate of change of the decision parameters is utilized. In a currently preferred mode of the invention, the digital color component signals are RGB, and the color component word sizes are equal. The digital word size of the digital color components is preferably initially six bits per each component color, and the luminance function is determined with an accuracy based upon the six bit digital color values. Thereafter the word size of the digital color components is reduced to four bits each, and the run length and color components are coded together as a bit stream of combined run length and color information in sixteen bit digital words.

Other aspects and advantages of the invention will become apparent from the following detailed description and the accompanying drawings illustrated by way of example the features of the invention.

## BRIEF DESCRIPTION OF THE DRAWINGS

FIGURE 1 is a schematic diagram of the system and method for compressing color video data in a video communication system;
FIG. 2 is a luminance plot across one scan line in a video picture;
FIG. 3 shows a run length representation of features in a video scan line; and
FIG. 4 shows a run length representation of transitions about slope decision points of a video scan line.

## DETAILED DESCRIPTION OF THE INVENTION

As is shown in the drawings for purposes of illustration, the invention is embodied in a method and system for compressing color video data in a video communication system having means for producing a color video signal for a plurality of picture frames, with each picture frame comprising a plurality of scan lines composed of a plurality of pixels, each scan line having a starting pixel and an ending pixel, and each pixel in each frame comprising three digital color component signals of first, second and third digital word sizes. For each pixel a luminance function is determined, based upon at least one of the three digital color component signals for at least a substantial portion of the pixels in the scan lines of the picture frame, and one or more decision parameters based upon the difference of the luminance function between pixels at least one predetermined distance from another pixel on the scan line is determined for at least a substantial portion of the pixels in the scan lines of the picture frame. The absolute value of change of at least one of the decision parameters for each of the pixels is determined, and the amounts of change are compared with a corresponding threshold value to determine which of the pixels in the scan lines are loci for significant decision points in the decision parameter from pixel to pixel.

The word size of at least one of the three digital color component signals is reduced to provide three digitally reduced digital color component signals of fourth, fifth, and sixth digital word sizes, respectively, for each pixel, and these reduced digital color component signals are coded for each scan line as a plurality of combinations of pixel run lengths and the reduced color component signals for each run length, with the run lengths being determined between a starting point for each scan line, intermediate points which are decision points or points intermediate the decision points, and an ending pixel, with each run length being of a seventh digital word size.

The conversion of the color video information to run lengths representing transitions of the color video information from one locus of change to the next allows for shading and other gradual transitions of color information which would otherwise require a pixel by pixel coding to avoid reduced resolution. The coding of the digital color components reduced in their overall digital word size reduces the amount of information which is to be transmitted, without any significantly perceptible reduction in the color information received. The implementation of the invention permits the compression of color video data to levels which permit real time telecommunication and other applications of color video data compression without significant losses of perceptible information.

As is illustrated in the drawings, in a preferred implementation of the invention, the video communication system is capable of producing a color video picture using an RGB video camera, generating an analog RGB signal at the normal 60 fields per second, with each field representing half of the picture in an interlaced mode. The signal for the video picture frames generated by the camera 10 is received by an analog to digital converter 12, which converts the red, green and blue (RGB) analog components into digital RGB components, which are each digitized as six bit digital words, forming packets of bits for the RGB components for each pixel of the color video picture of eighteen bits.

The type of the device used to generate the source color video picture is not crucial to the invention, as a camera generating a standard NTSC composite signal which is converted to an RGB digital output would also be suitable as would a field rate differing from the standard 60 fields per second. The output of the camera also does not need to be strictly RGB, since other three color component groups may be used to create and transmit color video pictures. For example, the three digital color component signals may be cyan, magenta, and yellow; hue, saturation, and intensity; or even two distinct colors and a third parameter based upon the entire video signal, such as hue, saturation or intensity of an original analog video signal, so that there would be some automatic weighting of the color information generated by the camera.

It is also not essential that the three color components be represented by the same number of bits, since it is known in the television industry that certain ranges of colors are not as easily perceived by the human eye. Such a weighting of information could involve a reduction in the number of bits used for the red component in an RGB scheme, for example, thus permitting transmission of more gradations of other color information that is actually perceptible.

In addition, the source of the color video pictures to be compressed may be a storage means, such as a video disk, a computer file storage media, a video tape, or the like from which the color video information can be processed for introduction into the color video data compression system of the invention.

The digitized RGB signal is received by the transition engine portion 14 of the image capture engine 16, which preferably includes integrated circuit means and associated memory means. The first major part of the image capture engine is the transition engine which includes circuitry for determining a luminance function based upon the three color component video signal for each picture element, or pixel, of each scan line in the sequence of video picture frames generated by the analog front end of the system. In the preferred mode, the luminance converter 18 sums the bits from each of the three digital color components for each pixel in the scan lines of the video picture frame to get a luminance (or intensity) value and performs further processing of the data obtained. In the system of the present invention each scan line preferably contains 480 pixels, which matches the resolution of the camera and which provides for better resolution than is typically available in the prior art, in which generally only 256 pixels are utilized per scan line. The luminance of the three color components may be weighted to give greater significance to one color or two colors to provide the luminance function, and may also be based in part upon an original source analog video signal. However, the luminance function is preferably based in part at least upon the sum of the three digital color components. The luminance function derived from the sum of the three six bit color components therefore has a digital word size of eight bits. This luminance function for each pixel is utilized in the input capture engine for evaluating one or more decision parameters based upon the luminance function for determination of those pixels which operate as decision points about which tne one or more of the decision parameters are found to vary from a prestored set of threshold values.

The luminance function is an excellent indicator of color changes in the picture, or movements of objects in the picture. In the image capture engine the one or more decision parameters based upon the luminance function may also be used as the basis for determination of differences from line to line, and of distinctive sequences of pixels which define edges of objects which can be determined to be moving from frame to frame. Generally, the luminance, or other combination of color components which comprise the luminance function, undergoes significant changes where there are changes in the characteristics of the picture.

The camera also introduces anomalies or artifacts into the video picture due to noise in the color sampling resolution which ideally should be eliminated to reduce the amount of data to be transmitted since they contribute nothing beneficial to the picture. When the picture is displayed with a new field every 60th of a second, the effect of such anomalies is averaged out by the human eye. Areas having a smooth appearance and little actual detail upon close observation seem to "crawl". This appearance is also known as the "mosquito effect". When a picture is frozen so that only one field or picture frame is being examined, the picture takes on a grainy, speckled appearance. The impact of the noise on the luminance data is in the form of tiny variations in the computed luminance. When the picture is digitized, the digitizing process also converts all of these artifacts to digital representations, even though they do not actually represent picture detail. The processing of luminance in the image capture engine operates to eliminate such meaningless details.

One preferred method eliminating the non-essential details caused by noise in the luminance data is to determine the points of change based at least in part on the luminance function for pixels in the scan lines by comparing differences in one or more decision parameters with corresponding adaptive thresholds. This is termed feature encoding. The decision parameters are preferably comprised of differences of the luminance function between pixels, determined between proximate pixels (Diff-1) in a scan line, n plus one n plus two, or even a further distance away, where n represents the position on a scan line of the pixel being examined for changes in luminance; between adjacent first differences (Diff-2), and a cumulative parameter (Cum-diff) which is a sum of the individual difference functions Diff-1, and Diff-2. Each decision parameter has its own corresponding adaptive threshold, having a default value which is subject to modification by the system in response to operator settings. The adaptive threshold preferably has a default value which may be adjusted by the input capture engine responsive to operator or processor selections for resolution. The selecting of the threshold parameters for determining either the feature or transition decision points is quite subjective. The selection of the parameters determines the number of data points required to define the picture and it also determines the overall perceptual quality of the picture.

Typically for the feature run length determination, two thresholds are used. One is the cumulative change in luminance since the last decision point, Cumdiff. Cumdiff will trigger a decision point if it was greater than 6 and the number of pixels since the last decision point was greater than 5. Another decision parameter is the sum of two adjacent difference values, Diff2 (this is the same as the difference between luminance values that are two pixels apart). If the Diff2 value is computed to be greater than typically 32, the logic will signify that the line is entering an edge, which identifies a decision point, and will stay in the edge characteristic until the Diff2 value falls below 20. When the edge mode is exited, the color of the next pixel is carried all the way back to the pixel where the starting edge determination was made. Also, if Diff2 changes sign, it signifies a new decision point. Changing the values for the cumdiff thresholds greatly affects the quality and data complexity of the picture.

In the slope determination of decision points (apexes), three general conditions are used. An initial slope is determined at the decision point and all measurements are based on that slope. The initial slope, INITS, is determined by computing the following function termed NDIFF2:

$$NDIFF2 = (luminance_{(i+2)} - luminance_{(i)})/2$$

INITS is the value of NDIFF2 immediately after the decision point.

CUMDIFF in the slope case is defined the following way:

$$CUMDIFF_{(i)} = CUMDIFF_{(i-1)} + NDIFF2_{(i)}$$

If the absolute value of the CUMDIFF is typically greater than 20 and the number of pixels in the run length is typically greater than 10, then a decision point will be triggered. Similarly, if the absolute value of NDIFF2 is less than or equal to typically 4 and the run length is typically greater than 5, a decision point will be triggered unless the last decision point was also triggered in this manner. The third decision parameter is also based upon NDIFF2:

$$TRIGVAL_{(i)} = NDIFF2_{(i)} - INITS$$

The threshold for TRIGVAL is usually set in the range of 4 to 10 and will trigger a decision point any time the absolute value reaches or exceeds the set value and the run length is at least 2 pixels. Other techniques may be used but these seem to give good quality pictures with an acceptable number of data points.

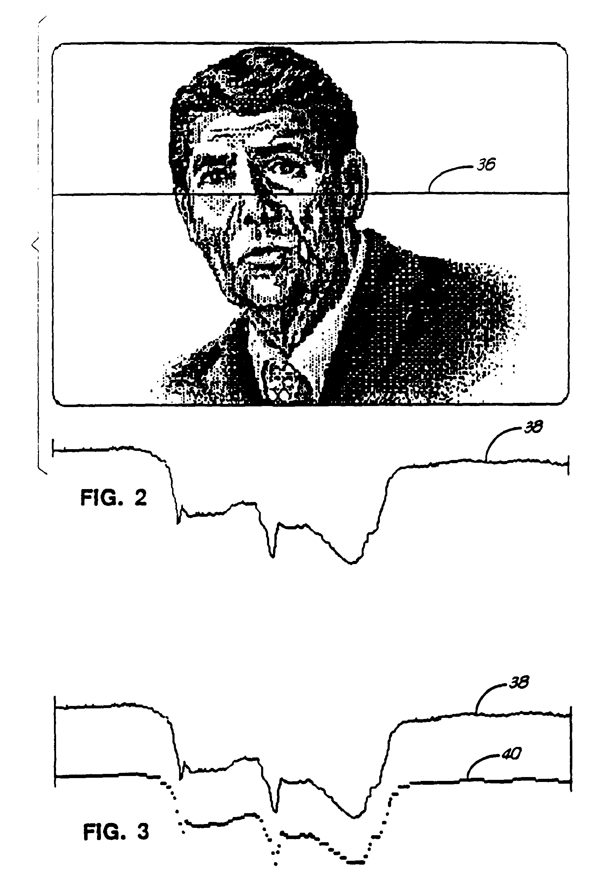

A graphic representation of a typical plot of luminance across a line of a video picture is shown in Figure 2. The luminance function of the pixels intersected by the scan line 36 is graphically represented by line 38. As is shown in Figure 3, a graph of the decision points based upon comparison of one of the decision parameters with the corresponding adaptive difference threshold in a feature encoding technique, results in stepped line 40, a sequence of horizontal straight lines across the luminance pattern. Each horizontal line represents a separate length of a specific color.

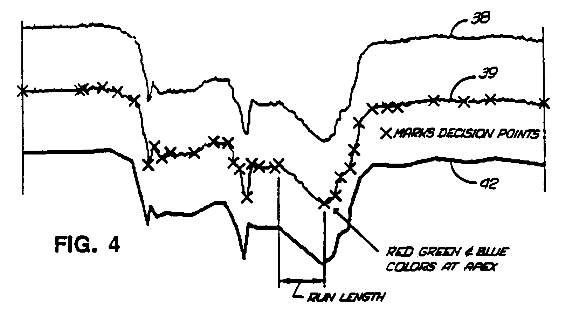

A second approach which may be used to eliminate the non-essential details is a transition or slope encoding technique, which is illustrated in Figure 4. In this technique the rate of change of the differences in the decision parameter between pixels is determined, and the rates of change of these differences are compared with an adaptive, prestored difference rate of change threshold to determine decision points or apex points. These change points or decision points are indicated as X's on line 39. They indicate the location of the next apex. "Run length" is defined as being the pixel distance between decision points, for both the feature encoding and slope encoding techniques. According to the transition or slope encoding technique, the luminance data results in a line 42 representing a series of apexes or slope decision points, which may be used for controlling the color segments between decision points. A drawing engine can produce a smooth transition of color values for the run length between decision points when the encoded information is to be retrieved. In this technique, for each scan line an initial color is transmitted, followed by as many sequences of run length and color values as are necessary to represent the picture frame content.

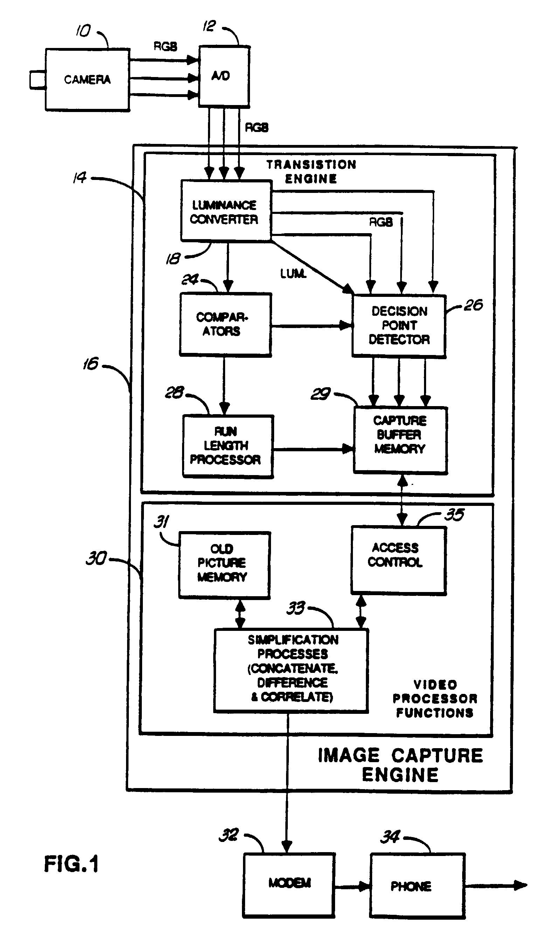

In the image capture engine of Fig. 1, the decision point detector 26 for determining decision points may alternatively be able to utilize either one of these methods for fixing the decision points in the color of the pixels in the picture, as each method has its respective advantages and disadvantages. The feature coding technique is typically more appropriate for pictures with a complexity of objects with distinctive edges or lines. On the other hand, the slope encoding technique is most suitable for encoding gradual transitions in shading or gradual color changes, but may require additional coding to represent complex pictures with images having many edges and lines. In the preferred implementation of the slope encoding technique, a sequence of thresholds will be compared with decision parameters, and the cumulative parameter (cum-diff) and an adaptive cumulative threshold will also be utilized in determining decision points, to account for those slow, gradual rates of change of luminance which would still result in an accumulated luminance change which is significant enough to merit identification of a decision point.

The three component color codes are also operated on in the run length processor 28 to drop the two least significant bits from the six bit values for the color components, reducing each of the color components in the preferred mode to four bit digital words. Alternatively, in one preferred embodiment, the transition engine may also contain a predetermined color map representation of three-component colors, with an n-bit code corresponding to a particular color combination. Here, the colors of the image are matched as closely as possible with the colors in the color map. As a further alternative, the color codes could also be rounded. These truncated or reduced digital color components are then encoded with the run lengths between decision points in the run length processor 28. Although the preferred bit size for the reduced color components is four bits, just as the input digital word size for the color components from the analog front end can be of different sizes to vary the informational content, the reduced digital color components may also be of different sizes. A particular combination of digital word sizes for color components may include a reduced size for the red component, due to the recognition in the industry of the reduced perceptibility of this component.

These feature encoding and slope encoding techniques allow for a variable number of bits to be used to represent an initial picture frame and then changes in subsequent picture frames, in order to encode the minimum number of bits for each picture frame. This is a significant improvement over the prior art which typically analyzes a four by four or three by three block of pixels to compress the information in such a block, which always results in the same number of bits being utilized to represent the informational content in the picture, whether there have been changes outside the segment or not.

The second major portion of the image capture engine is the capture buffer memory (CBM) 29, which receives the encoded run lengths and reduced color components representing some 200 lines of data from the picture frame. Alternatively, if the data rate required becomes too high to send pictures at a desired speed, lesser numbers of scan lines can be stored, such as 150 or 100 lines. The run length and color component information in the capture buffer memory is then transmitted to the video data processor 30, which accesses the run length and color data in the capture buffer memory by an access control 35, and operates as an interface to transform and transmit the video information in a further suitable for transmission by the modem 32, connected to the telephone 34, and which may include means for further compressing the video data, at 33. The video data may also be compared with a previous picture frame stored in an old picture memory 31.

It is possible in a simplification processor 33 of the video data processor 30 to further analyze the difference between color values of pixels after the color codes have been truncated to provide the reduced color component codes, and to concatenate run lengths of such reduced color component codes which vary less than a given threshold value, or to further concatenate run lengths of the reduced color codes based upon variance of one or more of the decision parameters with respect to a corresponding threshold. As the run length code is typically at a maximum of four bits to be compatible with run length and color code combinations of 16 bits, with 6 bit computer buses in the current implementation, concatentation of a sequence of pixels for each run length would be expected to permit coding of up to sixteen pixels per run length. However, in the current implementation the values 0 to 15 are used to represent run lengths of from 2 to 17 pixels, since run lengths of 0 and 1 are not meaningful. Alternatively, longer run lengths may be determined initially as well, as may be compatible with different capacity computer buses, to permit run lengths of greater than 4 bits and run length color code combinations greater than 16 bits.

As mentioned previously, it is expected that the limits of compression required for adequate smoothing of information in a real time sequencing of video pictures in telecommunication would be about 15 frames per second for transmission over conventional telephone lines. It would be possible to use a modem at 1200 bps (bits per second), but this would considerably slow the number of frames per second possible in the communication system. Ideally, the system is configured for half duplex mode, and a full duplex mode of configuration would be expected to require two telephone lines. Ideally the modem that is to be used is one which would utilize the largest bandwidth possible, and may be conventional 2400 bps or 9600 bps modem or special modems providing higher bit rates may be used.

Although the invention has been described in the context of a video telephone conferencing system, the invention may be also be adapted for use in compressing color video data on magnetic media, such as magnetic floppy discs which may be used in storing and communicating such data via computer systems, magnetic hard disks for image storage or short video movie sequences, or on video discs for video disc players which could transmit the information in the form of a full length movie.

In the foregoing description, it has been demonstrated that the method and system for compressing color video data can achieve a significant elimination of extraneous noise introduced by a video camera, and can result in a significant improvement in coding of the minimum amount of information necessary to reconstruct color video picture frames in a real time sequencing of video pictures.

It will also be appreciated that the method and system for compressing color video data in a video communication system according to the invention reduces the digital word sizes of data encoded, and codes only the minimum necessary decision points in scan lines in video color pictures for reception, storage, and/or retrieval by a system for decompressing and decoding the color video information.

## Claims

1. A method of compressing color video data for a plurality of video picture frames, with each picture frame comprising a plurality of scan lines composed of a plurality of pixels, each scan line having a starting pixel and an ending pixel, and each pixel in said picture frame comprising three digital color component signals of first, second and third digital word sizes, respectively, said method comprising the steps of, for each pixel of at least a substantial portion of each of a plurality of scan lines:

   a) determining a luminance value for said pixel as a function of at least one of said three digital color component signals;
   b) determining at least one decision parameter representing the change in luminance for said pixel as the difference between the luminance value for said pixel and the luminance value for at least one other pixel of the same scan line;
   c) comparing the value of said at least one decision parameter with at least one corresponding adjustable threshold to determine whether the value of said at least one decision parameter exceeds said at least one corresponding adjustable threshold, and determining on the basis of said comparison whether said pixel represents a decision point representing a predetermined change in luminance;
   d) if the pixel represents a decision point, reducing the word size of at least one of said three digital color component signals to provide corresponding reduced digital color component signals for said pixel; and
   e) coding said pixel as one of a run length of pixels defined by a combination of a pixel run length and said corresponding digital color component signals, each said run length of pixels starting either at a starting pixel of the scan line or at a pixel representing a decision point and ending either at a pixel immediately prior to a pixel representing a decision point or at an ending pixel of the scan line.

2. The method of Claim 1, wherein said step (c) of determining whether said pixel represents a decision point further comprises the steps of:

   comparing the value of said at least one decision parameter with the value of said at least one decision parameter for an adjacent pixel; and
   if the value of said at least one decision parameter changes sign between the adjacent pixels, defining said pixel as a decision point.

3. The method of Claim 1, wherein said step (c) of determining whether said pixel represents a decision point further comprises the steps of:

determining the rate of change of said at least one decision parameter between said pixel and at least one other pixel of the same scan line; comparing said rate of change with a corresponding adjustable rate of change threshold and;

determining whether said rate of change exceeds said corresponding adjustable rate of change threshold and defining said pixel as a decision point if the rate of change has a predefined relationship to the corresponding adjustable rate of change threshold.

4. The method of Claim 3 wherein the step of determining the rate of change of said at least one decision parameter further comprises the steps of:

determining an incremental rate of change of said at least one decision parameter between said pixel and another pixel; and

accumulating said incremental rate of change with the incremental rate of change of each prior pixel that is between a previously determined decision point and said pixel, to produce a cumulative difference parameter (CUMDIFF(i)) ;

the step of comparing further comprises the step of comparing said cumulative difference parameter with an adjustable cumulative difference threshold; and

said step of determining whether said rate of change exceeds said corresponding adjustable rate of change threshold further comprises the step of determining whether said cumulative difference parameter exceeds said adjustable cumulative difference threshold.

5. The method of Claim 1, wherein the step of determining said luminance value includes summing each of said three digital color component signals.

6. The method of Claim 5, wherein the step of determining said luminance value includes the step of calculating a weighted sum of said three digital color component signals.

7. The method of Claim 1, wherein said one other pixel is a distance of one pixel away from said pixel.

8. The method of Claim 1, wherein said one other pixel is a distance of two pixels away from said pixel.

9. The method of Claims 7 or 8, wherein a cumulative decision parameter is determined by summing the values of one of said at least one decision parameter for said pixel and one other pixel.

10. The method of Claims 7 or 8, wherein a difference decision parameter is determined from the difference between the values of one of said at least one decision parameters for said pixel and one other pixel.

11. The method of Claim 1, further comprising the step of concatenating said run length of pixels with a second run length of pixels, if the said corresponding digital color component signals of said run lengths differ from each other by less than a predetermined amount.

12. A system for compressing color video data for a plurality of video picture frames, with each picture frame comprising a plurality of scan lines composed of a plurality of pixels, each scan line having a starting pixel and an ending pixel and each pixel in said frame comprising three digital color component signals of first, second and third digital word sizes, respectively, said system comprising:

a) means (18) for determining a luminance value for each pixel of at least a substantial portion of each of a plurality of scan lines as a function of at least one of said three digital color component signals;

b) means (24) for determining at least one decision parameter representing a change in luminance for each said pixel as the difference between the luminance value for each said pixel and the luminance value for at least one other pixel of the same scan line;

c) means (26) for comparing said at least one said decision parameter with at least one corresponding adjustable threshold to determine whether the value of said at least one decision parameter exceeds said at least one corresponding adjustable threshold, and for determining on the basis of said comparison whether each said pixel represents a decision point representing a predetermined change in luminance;

d) means (28) for reducing the word size of at least one of said three digital color component signals, for each said pixel that represents a said decision point, to provide corresponding reduced digital color component signals for each said pixel;

e) means (26) for coding each said pixel as one of a run length of pixels defined by a combination of a pixel run length and said corresponding digital color component signals, each said run length of pixels starting either at a starting pixel of the scan line or at a pixel representing a decision point and ending either at a pixel immediately prior to a pixel representing a decision point or at an ending pixel of the scan line.

13. The system of Claim 12, wherein said means (26) for determining whether said pixel represents a decision point further comprises

a) means for comparing the value of said at least one decision parameter with the value of said at least one decision parameter for an adjacent pixel, and
b) means for determining whether the value of said at least one decision parameter changes sign between adjacent pixels, and for defining said pixel as a decision point if the value of said at least one decision parameter changes sign.

14. The system of Claim 12, wherein said means (26) for determining whether said pixel represents a decision point further comprises:

a) means for determining the rate of change of said at least one decision parameter between each said pixel and at least one other pixel of the same scan line;
b) means for comparing the or each said rate of change with a corresponding adjustable rate of change threshold; and
c) means for determining for whether said rate of change exceeds said corresponding adjustable rate of change threshold, and for defining said pixel as a decision point if the rate of change has a predefined relationship to the corresponding adjustable rate of change threshold.

15. The system of Claim 12, wherein said means (18) for determining said luminance value includes means for summing each of said three digital color component signals.

16. The system of Claim 15, wherein said means (18) for determining said luminance value includes means for calculating a weighted sum of said three digital color component signals.

17. The system of Claim 12, further comprising means (33) for concatenating said run length of, pixels with a second run length of pixels, if said corresponding digital color component signals of said run lengths differ from each other by less than a predetermined color difference threshold.

**Patentansprüche**

1. Verfahren zum Komprimieren von Farbvideodaten für eine Mehrzahl von Videobildern, wobei jedes Bild eine Mehrzahl von Abtastzeilen umfaßt, welche aus einer Mehrzahl von Pixeln aufgebaut sind, wobei jede Abtastzeile ein Startpixel und ein Endpixel aufweist und wobei jedes Pixel in dem Bild drei digitale Farbkomponentensignale einer ersten, zweiten bzw. dritten Digitalwortgröße umfaßt, wobei das Verfahren für jedes Pixel von jeweils zumindest einem wesentlichen Teil einer Mehrzahl von Abtastzeilen die Schritte umfaßt:

a) Ermitteln eines Luminanzwerts für das Pixel als Funktion wenigstens eines der drei digitalen Farbkomponentensignale,
b) Ermitteln wenigstens eines die Luminanzänderung für das Pixel darstellenden Entscheidungsparameters als Differenz zwischen dem Luminanzwert für das Pixel und dem Luminanzwert für wenigstens ein anderes Pixel derselben Abtastzeile,
c) Vergleichen des Werts des wenigstens einen Entscheidungsparameters mit wenigstens einer entsprechenden einstellbaren Schwelle, um festzustellen, ob der Wert des wenigstens einen Entscheidungsparameters die wenigstens eine entsprechende einstellbare Schwelle übersteigt, und Feststellen anhand dieses Vergleichs, ob das Pixel einen Entscheidungspunkt darstellt, welcher eine vorbestimmte Luminanzänderung darstellt,
d) falls das Pixel einen Entscheidungspunkt darstellt, Reduzieren der Wortgröße wenigstens eines der drei digitalen Farbkomponentensignale, um entsprechende reduzierte digitale Farbkomponentensignale für das Pixel bereitzustellen, und
e) Codieren des Pixels als eines einer Lauflänge von Pixeln, welche durch eine Kombination einer Pixellauflänge und der entsprechenden digitalen Farbkomponentensignale definiert ist, wobei jede Lauflänge von Pixeln entweder an einem Startpixel der Abtastzeile oder an einem einen Entscheidungspunkt darstellenden Pixel startet und entweder an einem Pixel unmittelbar vor einem einen Entscheidungspunkt darstellenden Pixel oder an einem Endpixel der Abtastzeile endet.

2. Verfahren nach Anspruch 1, bei dem der Schritt (c) des Feststellens, ob das Pixel einen Entscheidungspunkt darstellt, ferner die Schritte umfaßt:
Vergleichen des Werts des wenigstens einen Entscheidungsparameters mit dem Wert des wenigstens einen Entscheidungsparameters für ein benachbartes Pixel und Definieren des Pixels als Entscheidungspunkt, wenn der Wert des wenigstens einen Entscheidungsparameters zwischen den benachbarten Pixeln sein Vorzeichen ändert.

3. Verfahren nach Anspruch 1, bei dem der Schritt (c) des Feststellens, ob das Pixel einen Entscheidungspunkt darstellt, ferner die Schritte umfaßt:
Ermitteln der Änderungsrate des wenigstens einen Entscheidungsparameters zwischen dem Pixel und wenigstens einem anderen Pixel derselben Abtastzeile, Vergleichen dieser Änderungsrate mit einer entsprechenden einstellbaren Änderungsratenschwelle und Feststellen, ob die Änderungsrate die entsprechende einstellbare Änderungsratenschwelle übersteigt, und Definieren des Pixels als Entscheidungspunkt, wenn die Änderungsrate einen im voraus festgelegten Zusammenhang mit der entsprechenden einstellbaren Änderungsratenschwelle besitzt.

4. Verfahren nach Anspruch 3, bei dem der Schritt des Ermittelns der Änderungsrate des wenigstens einen Entscheidungsparameters ferner die Schritte umfaßt:
Ermitteln einer inkrementalen Änderungsrate des wenigstens einen Entscheidungsparameters zwischen dem Pixel und einem anderen Pixel und Akkumulieren der inkrementalen Änderungsrate mit der inkrementalen Änderungsrate jedes vorherigen Pixels, das sich zwischen einem im voraus festgelegten Entscheidungspunkt und dem Pixel befindet, um einen Parameter für eine kumulative Differenz (CUMDIFF(i)) zu erzeugen, bei dem der Schritt des Vergleichens ferner den Schritt des Vergleichens des Parameters für die kumulative Differenz mit einer einstellbaren Schwelle für die kumulative Differenz umfaßt und bei dem der Schritt des Feststellens, ob die Änderungsrate die entsprechende einstellbare Änderungsratenschwelle übersteigt, ferner den Schritt des Feststellens umfaßt, ob der Parameter für die kumulative Differenz die einstellbare Schwelle für die kumulative Differenz übersteigt.

5. Verfahren nach Anspruch 1, bei dem der Schritt des Ermittelns des Luminanzwerts die Summierung jedes der drei digitalen Farbkomponentensignale umfaßt.

6. Verfahren nach Anspruch 5, bei dem der Schritt des Ermittelns des Luminanzwerts den Schritt der Berechnung einer gewichteten Summe der drei digitalen Farbkomponentensignale umfaßt.

7. Verfahren nach Anspruch 1, bei dem das eine andere Pixel eine einem Pixel entsprechende Entfernung von dem Pixel besitzt.

8. Verfahren nach Anspruch 1, bei dem das eine andere Pixel eine zwei Pixeln entsprechende Entfernung von dem Pixel besitzt.

9. Verfahren nach Anspruch 7 oder 8, bei dem ein kumulativer Entscheidungsparameter ermittelt wird, indem die Werte des wenigstens einen Entscheidungsparameters für das Pixel und ein anderes Pixel summiert werden.

10. Verfahren nach Anspruch 7 oder 8, bei dem ein Differenz-Entscheidungsparameter aus der Differenz zwischen den Werten eines des wenigstens einen Entscheidungsparameters für das Pixel und ein anderes Pixel ermittelt wird.

11. Verfahren nach Anspruch 1, ferner umfassend den Schritt des Verknüpfens der Lauflänge von Pixeln mit einer zweiten Lauflänge von Pixeln, wenn die entsprechenden digitalen Farbkomponentensignale der Lauflängen einander um weniger als einen vorbestimmten Betrag unterscheiden.

12. System zum Komprimieren von Farbvideodaten für eine Mehrzahl von Videobildern, wobei jedes Bild eine Mehrzahl von Abtastzeilen umfaßt, die aus einer Mehrzahl von Pixeln aufgebaut sind, wobei jede Abtastzeile ein Startpixel sowie ein Endpixel aufweist und jedes Pixel in dem Bild drei digitale Farbkomponentensignale einer ersten, zweiten bzw. dritten Digitalwortgröße umfaßt, wobei das System umfaßt:

a) Mittel (18) zum Ermitteln eines Luminanzwerts für jedes Pixel von jeweils zumindest einem wesentlichen Teil einer Mehrzahl von Abtastzeilen als Funktion wenigstens eines der drei digitalen Farbkomponentensignale,
b) Mittel (24) zum Ermitteln wenigstens eines eine Luminanzänderung für jedes Pixel darstellenden Entscheidungsparameters als Differenz zwischen dem Luminanzwert für jedes Pixel und dem Luminanzwert für wenigstens ein anderes Pixel derselben Abtastzeile,
c) Mittel (26) zum Vergleichen des wenigstens einen Entscheidungsparameters mit wenigstens einer entsprechenden einstellbaren Schwelle, um festzustellen, ob der Wert des wenigstens einen Entscheidungsparameters die wenigstens eine entsprechende einstellbare Schwelle übersteigt, und zum Feststellen anhand dieses Vergleichs, ob das Pixel jeweils einen Entscheidungspunkt darstellt, welcher eine vorbestimmte Luminanzänderung darstellt,
d) Mittel (28) zum Reduzieren der Wortgröße wenigstens eines der drei digitalen Farbkomponentensignale für jedes Pixel, welches einen Entscheidungspunkt darstellt, um jeweils entsprechende reduzierte digitale Farbkomponentensignale für diese Pixel bereitzustellen,

e) Mittel (26) zum Codieren jedes Pixels als eines einer Lauflänge von Pixeln, welche durch eine Kombination einer Pixellauflänge und der entsprechenden digitalen Farbkomponentensignale definiert ist, wobei jede Lauflänge von Pixeln entweder an einem Startpixel der Abtastzeile oder an einem einen Entscheidungspunkt darstellenden Pixel startet und entweder an einem Pixel unmittelbar vor einem einen Entscheidungspunkt darstellenden Pixel oder an einem Endpixel der Abtastzeile endet.

13. System nach Anspruch 12, bei dem die Mittel (26) zum Feststellen, ob das Pixel einen Entscheidungspunkt darstellt, ferner umfassen:

a) Mittel zum Vergleichen des Werts des wenigstens einen Entscheidungsparameters mit dem Wert des wenigstens einen Entscheidungsparameters für ein benachbartes Pixel und
b) Mittel zum Feststellen, ob der Wert des wenigstens einen Entscheidungsparameters sein Vorzeichen zwischen benachbarten Pixeln ändert, und zum Definieren des Pixels als Entscheidungspunkt, wenn der Wert des wenigstens einen Entscheidungsparameters sein Vorzeichen ändert.

14. System nach Anspruch 12, bei dem die Mittel (26) zum Feststellen, ob das Pixel einen Entscheidungspunkt darstellt, ferner umfassen:

a) Mittel zum Ermitteln der Änderungsrate des wenigstens einen Entscheidungsparameters zwischen jedem Pixel und wenigstens einem anderen Pixel derselben Abtastzeile,
b) Mittel zum Vergleichen der oder jeder Änderungsrate mit einer entsprechenden einstellbaren Änderungsratenschwelle und
c) Mittel zum Feststellen, ob die Änderungsrate die entsprechende einstellbare Änderungsratenschwelle übersteigt, und zum Definieren des Pixels als Entscheidungspunkt, wenn die Änderungsrate einen im voraus festgelegten Zusammenhang mit der entsprechenden einstellbaren Änderungsratenschwelle besitzt.

15. System nach Anspruch 12, bei dem die Mittel (18) zum Ermitteln des Luminanzwerts Mittel zum Summieren jedes der drei digitalen Farbkomponentensignale umfassen.

16. System nach Anspruch 15, bei dem die Mittel (18) zum Ermitteln des Luminanzwerts Mittel zum Berechnen einer gewichteten Summe der drei digitalen Farbkomponentensignale umfassen.

17. System nach Anspruch 12, ferner umfassend Mittel (33) zum Verknüpfen der Lauflänge von Pixeln mit einer zweiten Lauflänge von Pixeln, wenn die entsprechenden digitalen Farbkomponentensignale der Lauflängen einander um weniger als eine vorbestimmte Farbdifferenzschwelle unterscheiden.

## Revendications

1. Procédé de compression de données vidéo couleur pour plusieurs trames d'images vidéo, chaque trame d'image comprenant plusieurs lignes de balayage composées de plusieurs pixels, chaque ligne de balayage comprenant un pixel de début et un pixel de fin, et chaque pixel de ladite trame d'image comprenant trois signaux de composante de couleur numérique, respectivement, d'une première, deuxième, et troisième taille de mot numérique, ledit procédé comprenant, pour chaque pixel d'au moins une partie substantielle de chacune de plusieurs des lignes de balayage, les étapes :

a) de détermination d'une valeur de luminance pour ledit pixel en fonction d'au moins l'un desdits signaux de composante de couleur numérique ;
b) de détermination d'au moins un paramètre de décision représentant la variation de luminance pour ledit pixel, sous forme de la différence entre ladite valeur de luminance pour ledit pixel et ladite valeur de luminance pour au moins un autre pixel de la même ligne de balayage ;
c) de comparaison de la valeur dudit au moins un paramètre de décision avec au moins un seuil réglable correspondant, pour déterminer si la valeur dudit au moins un paramètre de décision dépasse ledit au moins un seuil réglable correspondant, et de détermination, sur la base de ladite comparaison, si ledit pixel représente un point de décision représentant une variation prédéterminée de la luminance ;
d) si le pixel représente un point de décision, de réduction de la taille de mot d'au moins l'un desdits trois signaux de composante de couleur numérique pour donner des signaux de composante de couleur numérique réduits correspondants pour ledit pixel ; et
e) de codage dudit pixel comme l'un d'une séquence de pixels définie par une combinaison d'une séquence de pixels et desdits signaux de composante de couleur numérique correspondants, chacune desdites séquences de pixels commençant soit à un pixel de début de la ligne de balayage, soit à un pixel représentant un point de décision et se terminant soit à un pixel situé immédiatement avant un pixel représentant un point de décision soit à un pixel de fin de la ligne de balayage.

**2.** Procédé selon la revendication 1, dans lequel ladite étape (c) de détermination du fait que ledit pixel représente un point de décision comprend, en outre, les étapes :

de comparaison de la valeur dudit au moins un paramètre de décision avec la valeur dudit au moins un paramètre de décision pour un pixel adjacent ; et

si la valeur dudit au moins un paramètre de décision change de signe entre les pixels adjacents, de définition dudit pixel comme un point de décision.

**3.** Procédé selon la revendication 1, dans lequel ladite étape (c) de détermination du fait que ledit pixel représente un point de décision comprend, en outre, les étapes :

de détermination du taux de variation dudit au moins un paramètre de décision entre ledit pixel et au moins un autre pixel de la même ligne de balayage ;

de comparaison dudit taux de variation avec un taux réglable de seuil de variation et ;

de détermination du fait que ledit taux de variation excède ledit taux réglable correspondant de seuil de variation et de définition dudit pixel comme un point de décision si le taux de variation a une relation prédéterminée avec le taux réglable correspondant de seuil de variation.

**4.** Procédé selon la revendication 3, dans lequel l'étape de détermination du taux de variation dudit au moins un paramètre de décision comprend, en outre, les étapes :

de détermination d'un taux incrémentiel de variation dudit au moins un paramètre de décision entre ledit pixel et un autre pixel ; et

de cumul dudit taux incrémentiel de variation avec le taux incrémentiel de variation de chaque pixel antérieur qui se trouve entre un point de décision déterminé antérieurement et ledit pixel, pour produire un paramètre de différence cumulée (CUMDIFF(i)) ;

dans lequel l'étape de comparaison comprend, en outre, l'étape de comparaison dudit paramètre de différence cumulée avec un seuil de différence cumulée variable ; et

dans lequel ladite étape de détermination du fait que ledit taux de variation dépasse ledit taux réglable correspondant de seuil de variation comprend, en outre, l'étape de détermination du fait que ledit paramètre de différence cumulée dépasse ledit seuil de différence cumulée réglable.

**5.** Procédé selon la revendication 1, dans lequel l'étape de détermination de ladite valeur de luminance comprend la sommation de chacun desdits trois signaux de composante de couleur numérique.

**6.** Procédé selon la revendication 5, dans lequel l'étape de détermination de ladite valeur de luminance comprend l'étape de calcul d'une somme pondérée desdits trois signaux de composante de couleur numérique.

**7.** Procédé selon la revendication 1, dans lequel ledit un autre pixel est écarté dudit pixel de la distance d'un pixel.

**8.** Procédé selon la revendication 1, dans lequel ledit un autre pixel est écarté dudit pixel de la distance de deux pixels.

**9.** Procédé selon les revendications 7 ou 8, dans lequel on détermine un paramètre de décision cumulé en additionnant les valeurs de l'un dudit au moins un paramètre de décision pour ledit pixel et pour un autre pixel.

**10.** Procédé selon les revendications 7 ou 8, dans lequel on détermine un paramètre de décision différence à partir de la différence entre les valeurs de l'un dudit au moins un paramètre de décision pour ledit pixel et pour un autre pixel.

**11.** Procédé selon la revendication 1, comprenant, en outre, l'étape de concaténation de ladite séquence de pixels avec une seconde séquence de pixels, si lesdits signaux de composante de couleur numérique correspondants desdites séquences diffèrent l'un de l'autre de moins qu'une valeur prédéterminée.

**12.** Système pour comprimer des données vidéo couleur pour plusieurs trames d'images vidéo, chaque trame d'image comprenant plusieurs lignes de balayage composées de plusieurs pixels, chaque ligne de balayage comprenant un pixel de début et un pixel de fin, et chaque pixel de ladite trame d'image comprenant trois signaux de composante de couleur numérique, respectivement, d'une première, deuxième, et troisième taille de mot numérique, ledit système comprenant :

a) un moyen de détermination (18) pour déterminer une valeur de luminance pour chaque pixel, d'au moins une partie substantielle de chacune de plusieurs des lignes de balayage, en fonction d'au moins l'un desdits signaux de composante de couleur numérique ;

b) un moyen de détermination (24) pour déterminer au moins un paramètre de décision représentant la variation de luminance pour ledit pixel, sous forme de la différence entre ladite valeur de luminance pour ledit pixel et ladite valeur de luminance pour au moins un autre pixel de la même ligne de balayage ;

c) un moyen de comparaison (26) pour comparer la valeur dudit au moins un paramètre de décision avec au moins un seuil réglable correspondant, pour déterminer si la valeur dudit au moins un paramètre de décision dépasse ledit au moins un seuil réglable correspondant, et pour déterminer, sur la base de ladite comparaison, si chaque dit pixel représente un point de décision représentant une variation prédéterminée de la luminance ;

d) un moyen de réduction (28) pour réduire la taille de mot d'au moins l'un desdits trois signaux de composante de couleur numérique, pour chaque dit pixel qui représente un point de décision, pour donner des signaux de composante de couleur numérique réduits correspondants pour chaque dit pixel ; et

e) un moyen de codage (26) pour coder chaque dit pixel comme l'un d'une séquence de pixels définie par une combinaison d'une séquence de pixels et desdits signaux de composante de couleur numérique correspondants, chacune desdites séquences de pixels commençant soit à un pixel de début de la ligne de balayage, soit à un pixel représentant un point de décision et se terminant soit à un pixel situé immédiatement avant un pixel représentant un point de décision soit à un pixel de fin de la ligne de balayage.

13. Système selon la revendication 12, dans lequel ledit moyen (26) pour déterminer si ledit pixel représente un point de décision comprend, en outre,:

a) un moyen de comparaison pour comparer la valeur dudit au moins un paramètre de décision avec la valeur dudit au moins un paramètre de décision pour un pixel adjacent ; et ;

b) un moyen de détermination pour déterminer si la valeur dudit au moins un paramètre de décision change de signe entre des pixels adjacents, et pour définir ledit pixel comme un point de décision si la valeur dudit au moins un paramètre de décision change de signe.

14. Système selon la revendication 12, dans lequel ledit moyen (26) pour déterminer si ledit pixel représente un point de décision comprend, en outre :

a) un moyen de détermination pour déterminer le taux de variation dudit au moins un paramètre de décision entre chaque dit pixel et au moins un autre pixel de la même ligne de balayage ;

b) un moyen de comparaison pour comparer chaque dit taux de variation avec un taux réglable de seuil de variation et ;

c) un moyen de détermination pour déterminer si ledit taux de variation excède ledit taux réglable correspondant de seuil de variation et pour définir dudit pixel comme un point de décision si le taux de variation a une relation prédéterminée avec le taux réglable correspondant de seuil de variation.

15. Système selon la revendication 12, dans lequel ledit moyen (18) de détermination de ladite valeur de luminance comprend un moyen pour additionner chacun desdits trois signaux de composante de couleur numérique.

16. Système selon la revendication 15, dans lequel ledit moyen (18) de détermination de ladite valeur de luminance comprend un moyen pour calculer une somme pondérée desdits trois signaux de composante de couleur numérique.

17. Système selon la revendication 12, comprenant, en outre, un moyen (33) pour concaténer ladite séquence de pixels avec une seconde séquence de pixels, si lesdits signaux de composante de couleur numérique correspondants desdites séquences diffèrent les uns des autres de moins qu'un seuil de différence de couleur prédéterminé.

**FIG.1**

FIG. 2

FIG. 3

FIG. 4

38
39
X MARKS DECISION POINTS
42
RED GREEN & BLUE COLORS AT APEX
RUN LENGTH